# EUROPÄISCHE PATENTSCHRIFT

(11) **EP 2 194 308 B1**
(45) Veröffentlichungstag und Bekanntmachung des Hinweises auf die Patenterteilung: **29.04.2015**
(21) Anmeldenummer: 09014544.2
(22) Anmeldetag: 23.11.2009
(51) Int. Cl.: F16L 37/098, F16L 25/00, F16L 55/115

(54) **Kupplungsstück für Wellenschlauch-Anschlussteile**
Coupling piece for corrugated hose connectors
Pièce de couplage pour pièces de raccordement de tuyau annelé

(30) Priorität: 08.12.2008 DE 102008060679
(43) Veröffentlichungstag der Anmeldung: 09.06.2010
(73) Patentinhaber: Flexa GmbH & Co. Produktion und Vertrieb KG, 63456 Hanau (DE)
(72) Erfinder: Fieber, Dieter, 63512 Hainburg (DE); Kuchenbrod, Frank, 63456 Hanau (DE)
(74) Vertreter: Grimm, Ekkehard

(56) Entgegenhaltungen:
- DE-C1- 4 020 171
- DE-U1- 20 204 631
- US-A1- 2002 135 182

## Beschreibung

Die Erfindung betrifft ein Kupplungsstück für Wellenschlauch-Anschlussteile mit einem ersten Verbindungsende, das Verbindungselemente aufweist, an denen ein Anschlussteil, mit den Verbindungselementen in Eingriff gebracht, verbunden werden kann, und mit einem zweiten Ende.

Siehe z.B. die US 2002/135182 A1, dem Oberbegriff entsprechend.

Wellenschläuche aus Kunststoffmaterial werden seit vielen Jahren als Schutzrohre eingesetzt, um elektrische, pneumatische oder sonstige Leitungen zu schützen, die in solchen Schutzrohren verlegt werden. An den Enden dieser Wellenschläuche werden üblicherweise Anschlussteile aufgesteckt, die einen Abschluss bilden und beispielsweise auch zur Befestigung des Wellenschlauchs an einer Wanddurchführung dienen, oder die beispielsweise eine Verzweigungsstelle, etwa in der Form eines T-Stücks oder Y-Stücks, bilden. Entsprechend den jeweiligen Sicherheitsanforderungen, die von einem solchen Schutzsystem am Einsatzort gefordert werden, muss die Verbindungsstelle zwischen Wellenschlauch und Anschlussstück eine bestimmte Schutzklasse erfüllen.

Anschlussstücke, wie sie vorstehend beschrieben sind, haben sich im Markt etabliert und sind in vielfältiger Form erhältlich. Während in früheren Zeiten Schraubverbindungen zum Einsatz kamen, werden heutzutage Anschlussstücke eingesetzt, die Krallen aufweisen, die sich in den äußeren Nuten eines Wellenschlauchs verhaken und so den Wellenschlauch aufnehmen.

Ein derartiges Anschlussstück ist beispielsweise aus der DE 40 20 171 C1 bekannt. Dieses Anschlussstück besteht aus einem annähernd zylindrischen Gehäuse mit einem Anschlussstück an der einen Seite. In die andere Seite des zylindrischen Gehäuses ist eine Innenhülse eingesetzt, die federnde Verriegelungskrallen mit nach innen weisenden Rastvorsprüngen aufweist. Jeder dieser Verriegelungskralle ist eine Öffnung in der Gehäusewand des zylindrischen Gehäuses zugeordnet derart, dass dann, wenn ein Druck radial nach außen auf die Verriegelungskrallen ausgeübt wird, diese Verriegelungskrallen radial nach außen dem Druck ausweichen können. Das bedeutet, dass dann, wenn in das offene Verbindungsende ein passender Wellenschlauch eingeschoben wird, die Verriegelungskrallen entlang der Oberfläche des sich in die Öffnung einschiebenden Wellenschlauches gleiten und dabei aufgrund der Wellenberge radial nach außen zurücktreten, um sich dann, wenn der Wellenschlauch vollständig in das Anschlussende eingesteckt ist, in dessen Oberfläche zu verriegeln.

Verbindungselemente der vorstehend beschriebenen Art sind in sehr unterschiedlichen Ausführungen auf dem Markt. Diese Verbindungs- und Anschlussteile unterscheiden sich im Wesentlichen durch die verwendeten Materialien sowie die Form und die Art der Verriegelungskrallen. Um ein solches Schutzsystem aus Wellenschläuchen zu verlegen, werden jeweils die Wellenschläuche in der erforderlichen Länge abgelängt, um dann an den jeweiligen Enden Anschlussstücke anzubringen. Wie bereits eingangs erwähnt, sind an manchen Einsatzorten T- oder Y-Verbindungsstücke bzw. Abzweigteile erforderlich, um beispielsweise einen Abzweig aus einem solchen Schutzrohrsystem zu bilden. Hierfür weisen derartige T- und Y-förmige Abzweigteile an jedem Ende ein Anschlussstück auf, an dem ein Wellenschlauch befestigt werden kann. Oftmals kann aber der Fall auftreten, dass von einem solchen Abzweigstück nur zwei Anschlussenden benötigt werden, um daran einen Wellenschlauch zu befestigen. Möglicherweise ist dann an dem anderen Ende ein Verbindungsteil erforderlich, das beispielsweise einen Gewindeanschluss besitzt. Für einen solchen Fall wird in das entsprechende Ende des Verzweigungsstücks ein mehr oder weniger kurzer Abschnitt eines Wellenschlauchs eingesetzt, um dann ein Adapterteil rastend auf das andere Ende des Wellenschlauchstücks aufzusetzen, das an seinem dann freien Ende ein Schraubgewinde aufweist.

Jede Verbindungsstelle zwischen Wellenschlauch und Anschlussstück muss den Anforderungen einer entsprechenden, geforderten Schutzklasse erfüllen. Es ist verständlich, dass jedes Anschlussstück einen kritischen Punkt darstellt, gerade dadurch, dass ein Wellenschlauch eine gewisse Flexibilität besitzt und er sich unter Umständen durch eine angewandte Walkbewegung aus dem Anschlussstück lösen lässt.

Die e.g. US 2002/135182 A1 beschreibt ein lösbares Verbindungsteil, das mit einem Verbindungskanal verbunden wird, durch den Samen oder Körner geleitet werden. Diese Anordnung wird in Verbindung mit einer landwirtschaftlichen Sähmaschine eingesetzt. Das Verbindungsteil kann an einem lösbaren Verbinder befestigt werden. Dieser lösbare Verbinder umfasst Verriegelungsteile, die in einen umlaufende Verriegelungsrand bzw. Verriegelungskanal des Verbindungsteils eingreifen. Der Verriegelungskanal weist im Querschnitt eine annähernd kreisförmige Kontur auf. Aufgrund dieser Kontur scheint ein sicherer Eingriff der Verriegelungsteile nicht gewährleistet zu sein.

Die EP 1 333 217 A2 beschreibt eine Rohrkupplung für ein Wellrohr. Als Besonderheit werden Verriegelungskrallen bzw. -zähne an den Enden von flexiblen Armen, die Teil des Gehäuses der Rohrkupplung sind, angegeben, die in die Rillen des Wellrohrs eingreifen, wenn dieses in die Rohrkupplung eingesteckt wird. Die flexiblen Arme sind an ihrem freien Ende, an dem sich auch die Verriegelungskrallen befinden, jeweils über einen zusätzlichen, gewellten Steg mit dem Gehäuse verbunden. Der gewellte Steg gibt nach, wenn das Wellrohr in das Gehäuse eingesteckt wird, und zieht sich in der Verriegelungsstellung des Arms wieder zusammen. Die Rillen des Wellrohrs sind in der Figur im Schnitt mit einer winkligen Kontur dargestellt, ohne dass auf diese Form der Rillen in der Beschreibung Bezug genommen wird.

Hiervon ausgehend liegt der vorliegenden Erfindung die Aufgabe zugrunde, ein Kupplungsstück zu schaffen, das bekannte Wellenschlauch-Schutzsysteme flexibler gestaltet und darüber hinaus für den Anwender eine kostengünstigere Variante darstellt, und das einen sicheren Halt in Wellenschlauch-Anschlussteilen, für die ein solches Kupplungsstück vorgesehen ist, gewährleistet.

Gelöst wird diese Aufgabe durch ein Kupplungsstück mit den Merkmalen des Anspruchs 1.

Das erfindungsgemäße Kupplungsstück stellt ein einfaches Bauteil dar, das bekannte Verbindungselemente für Wellenschläuche erweitert, da es, wie ein Wellenschlauch, mit diesen Verbindungselementen verbunden werden kann. Insbesondere als Abschlussteil von Abzweigverbindern, an denen andere Schutzteile als Wellenschläuche verbunden werden sollen, ist das Kupplungsstück einsetzbar. Der besondere Vorteil liegt darin, dass das Kupplungsstück auf seiner einen Seite wie ein Wellenschlauch verwendet werden kann, aber keine zusätzliche, abzudichtende und damit kritische Verbindungsstelle vorhanden ist. Solche Kupplungsstücke, wie sie hier angegeben sind, sind, mit den entsprechenden Anschlussteilen an dem anderen Ende, das demjenigen gegenüber liegt, das wie ein Wellenschlauch verwendet wird, sehr universell, auch in Art eines Baukastensystems, einsetzbar.

Bevorzugt weist das Verbindungsende des Kupplungsstücks mehrere in radialer Richtung umlaufende Rillen auf, die durch ringförmige Erhebungen voneinander getrennt sind. Die Rillen und die Erhebungen sind dabei in ihrem Abstand zueinander und in der Dimensionierung entsprechend der Oberflächenstruktur eines Wellenschlauchs ausgelegt. Demzufolge kann dieses Verbindungsende wie ein Wellenschlauch gleicher Außenabmessungen und Oberflächenstruktur verwendet werden, um es in Anschlussteile einzusetzen, die zur Verbindung mit einem Wellenschlauch vorgesehen sind. In die Rillen können die entsprechenden Verriegelungskrallen eingreifen, um dieses Kupplungsstück an einem anderen Teil zu halten.

Es hat sich als ausreichend erwiesen, dass das Verbindungsende zwischen vier und zehn Rillen, vorzugsweise zwischen vier und sechs Rillen, aufweist.

Damit sichergestellt ist, dass sich die Verriegelungskrallen eines Anschlussstücks sicher in den Rillen verhaken, weisen die Rillen, im Querschnitt gesehen, eine winklige Kontur mit annähernd parallelen Seitenwänden auf.

Um gute Dichteigenschaften im Bereich dieses Verbindungsendes sicherzustellen, ist der freie Endabschnitt des rohrförmigen Teils als Abschnitt mit einer glatten Oberfläche ausgebildet. An diesen Abschnitt kann sich dann eine O-Ring-Dichtung in dem Anschluss- und Verbindungsteil, in das das Kupplungsstück eingesteckt wird, anlegen.

Eine Länge des freien Endabschnitts des rohrförmigen Teils, von dem stirnseitigen Ende aus gemessen, von 10 bis 15 mm ist ausreichend, um eine solche Dichtfläche bereitzustellen.

Das zweite Ende des Kupplungsstücks kann Verbindungselemente aufweisen, an denen ein weiteres Anschlussteil, mit diesen Verbindungselementen in Eingriff gebracht, verbunden werden kann. Dadurch ergibt sich ein flexibles und vielseitiges, adaptives System aus entsprechenden Kupplungsstücken.

In einer weiteren Ausführungsform des Kupplungsstücks weisen beide Verbindungsenden die umlaufenden Rillen auf, so dass ein derartiges Kupplungsstück als ein Zwischenverbinder verwendbar ist.

Um ein Kupplungsstück bereitzustellen, mit dem ein Ende eines anderen Kupplungs- und Verbindungsteils verschlossen werden kann, wird das zweite Ende des Kupplungsstücks mit einer Kappe abgedeckt. Eine derartige Kappe kann einteilig mit dem zweiten Ende ausgebildet sein.

Das zweite Ende des Kupplungsstücks kann als Anschlussteil mit Außengewinde oder als Anschlussteil mit Innengewinde ausgeführt werden.

Vorzugsweise werden die Kupplungstücke, wie sie vorstehend beschrieben sind, aus einem Kunststoff gefertigt, wobei Polypropylen und Polyamid bevorzugt sind. Um solchen Kupplungsstücken eine hohe Stabilität zu verleihen, sollte ein faserverstärkter Kunststoff verwendet werden.

Weitere Einzelheiten und Merkmale der Erfindung ergeben sich aus der nachfolgenden Beschreibung eines Ausführungsbeispiels anhand der Zeichnung. In der Zeichnung zeigt
- Figur 1A: ein Kupplungsstück gemäß der Erfindung in einer Stellung, in der es mit einem bekannten Verbindungsstück, in diesem Fall einem T-Verbindungsstück, für Wellenschläuche verbunden werden kann,
- Figur 1 B: die Anordnung der Figur 1A, allerdings mit an dem T-Verbindungsstück verbundenem Kupplungsstück,
- Figuren 2A und 2B: das Kupplungsstück der Figuren 1A und 1B aus zwei unterschiedlichen Sichtrichtungen,
- Figuren 3A und 3B: ein weiteres Kupplungsstück aus zwei unterschiedlichen Sichtrichtungen, bei denen anstelle des Gewindes, wie es das Anschlussstück der Figuren 2A und 2B aufweist, ein Verbindungsteil mit Rastelementen ausgebildet ist,
- Figuren 4A und 4B: ein Kupplungsstück aus zwei unterschiedlichen Sichtrichtungen, das als Blindstopfen ausgebildet ist, und
- Figuren 5A und 5B: ein Kupplungsstück, das als ein Zwischenverbinder ausgelegt ist.

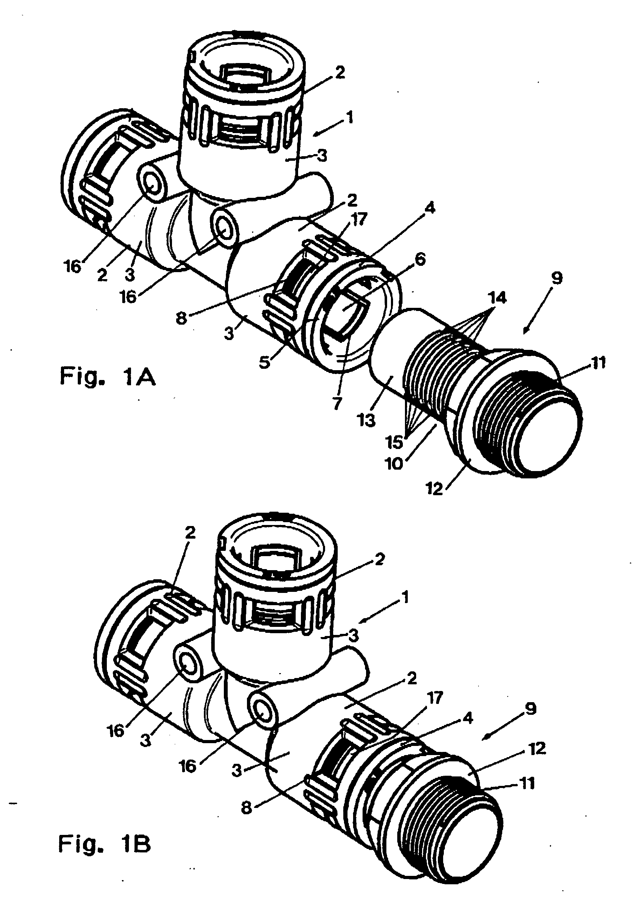

In den Figuren 1A und 1B ist ein herkömmliches T-Verbindungsstück 1 gezeigt, das drei Anschlussstücke 2 aufweist. Jedes Anschlussstück 2 umfasst ein zylindrisches Gehäuse 3, in das eine Innenhülse 4 eingesetzt ist, wobei diese Innenhülse 4 an deren außen liegendem Ende einen radial nach außen überstehenden Rand 5 aufweist, der sich an die Stirnfläche des Gehäuses 3 anlegt. An der Innenhülse 4 sind jeweils auf den gegenüberliegenden Seiten federnde Verriegelungskrallen 6 ausgeformt, die am freien Ende einen radial nach innen weisenden Rastvorsprung 7 besitzen. Jeder Verriegelungskralle 6 ist eine Öffnung 8 in der Gehäusewand des zylindrischen Gehäuses 3 zugeordnet, in die ein Rastvorsprung 17 hineinragt, so dass durch diese Rastvorsprünge 17 die Innenhülse 4 in dem zylindrischen Gehäuse 3 gehalten ist, indem die Rastvorsprünge 7 in die Öffnung 8 hinein ragen.

Üblicherweise werden in die Anschlussteile 2 eines solchen T-Anschlussstücks 1 flexible Wellenschläuche eingesteckt, die als Schutzrohre für elektrische, pneumatische oder sonstige Leitungen dienen. Je nach Schutzklasse, die von einem solchen Schutzsystem gefordert wird, muss die Verbindungsstelle zwischen Anschlussteil 2 und Wellenschlauch bestimmte Sicherheitsanforderungen, insbesondere Dichtigkeitserfordernisse gegen Feuchtigkeit, erfüllen.

Das T-Anschlussstück 1, das ein Beispiel solcher Anschlussstücke zeigt, kann nur in Verbindung mit Wellenschläuchen verwendet werden. Oftmals ist es aber erforderlich, Übergänge zu anderen Schutzsystemen zu schaffen, bei denen es sich beispielsweise um starre Rohre handeln kann, oder aber aus einem der Abzweige eine Leitung heraus zu führen, um sie mit einem Gerät zu verbinden. Für solche Übergänge werden beispielsweise Gewindeverbindungen oder Schnappverbindungen benötigt. Es existieren Anschlussstücke, die solchen entsprechen, wie sie an den drei Enden des T-Verbindungsstücks 1 in den Figuren 1A und 1B gezeigt sind, die an dem einen Ende ein Schraubgewinde aufweisen Um aber ein solches Anschlussstück mit Schraubgewinde an einem Anschlussstück 2 des T-Verbindungsstücks 1, wie es in den Figuren gezeigt ist, anzubringen, muss in jedem Fall ein Abschnitt eines passenden Wellenschlauchs zwischengefügt werden. Ein solcher Wellenschlauch führt aber zu zwei Verbindungsstellen, die jeweils Dichtigkeitsprobleme hervorrufen können dann, wenn auf den Wellenschlauch Biege- oder Zugkräfte aufgebracht werden.

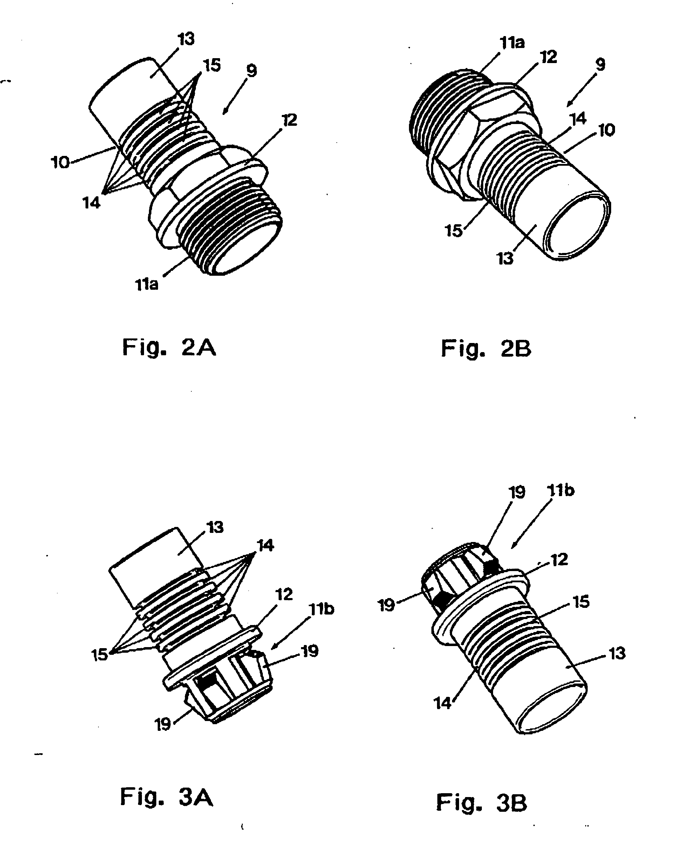

Um an einem Anschlussteil 2 des T-Verbindungsstücks 1 einen Gewindeanschluss anzubringen, ist in den Figuren 1A und 1B ein Kupplungsstück 9 vorgesehen, das in zwei weiteren perspektivischen Ansichten in den Figuren 2A und 2B dargestellt ist. Das Kupplungsstück 9 weist ein erstes Verbindungsende 10 und ein zweites Verbindungsende 11 auf, die durch einen umlaufenden Ringflansch 12 getrennt sind. Dieser Ringflansch 12 besitzt zusätzlich auf seiner einen Seite, wie die Figuren 2A und 2B zeigen, einen Außensechskant, um dort einen Maulschlüssel anzusetzen, um das Kupplungsstück 9 zu fixieren.

Das erste Verbindungsende 10 umfasst einen Endabschnitt 13 mit einer glatten Oberfläche, während der sich daran anschließende mittlere Abschnitt mit radial umlaufenden Rillen 14 versehen ist. In dem gezeigten Beispiel sind insgesamt fünf solcher Rillen 14 vorhanden. Zwischen jeder Rille 14 befindet sich eine schmale Erhebung 15, so dass dieser Abschnitt des ersten Verbindungsendes 10 die Oberflächenstruktur eines entsprechend dimensionierten Wellenschlauchs aufweist. Das zweite Verbindungsende 11 des Kupplungsstücks 9 ist mit einem Außengewinde 11a versehen, so dass daran passende Anschlussteile verschraubt werden können.

Das Kupplungsstück 9 kann, ausgehend von der Stellung, wie sie in Figur 1A gezeigt ist, in das Anschlussstück 9 des T-Verbindungsstücks 1 eingesteckt werden, wie dies in Figur 1B gezeigt ist. Wenn das Kupplungsstück 9 in das T-Verbindungsstück 1 eingesteckt ist, greifen die Vorsprünge 7 in eine passende Rille 14 ein, so dass das Kupplungsstück 9 gegen ein Herausziehen gesichert ist. Gleichzeitig werden die Rastvorsprünge 17 an der Außenseite der Verriegelungskrallen 6 radial nach außen in die Öffnungen 8 gedrückt. Der Endabschnitt 13 mit glatter Oberfläche dient als Dichtfläche zwischen dem zylindrischen Gehäuse 3 und dem Kupplungsstück 9, indem sich daran beispielsweise ein nicht näher dargestellter O-Ring, der in eine entsprechende Nut auf der Innenseite des zylindrischen Gehäuses 3 eingesetzt ist, dichtend anlegt.

Folglich wird durch das Kupplungsstück 9 mit seinem als Außengewinde ausgebildeten zweiten Verbindungsende 11 das eine Anschlussstück 2 des T-Verbindungsstücks 1 mit einem Gewindeanschluss versehen, wie dies die Figur 1B zeigt.

Es ist ersichtlich, dass solche Kupplungsstücke 9, wie sie an dem einen Anschlussende des T-Verbindungsstücks 1 angeordnet sind, auch an den weiteren Anschlussenden angeordnet werden können. Der besondere Vorteil eines solchen Kupplungsstücks liegt darin, dass es ein einteiliges Bauteil darstellt mit den sich daraus ergebenden Vorteilen hinsichtlich Dichtigkeit und der einfachen Handhabbarkeit.

Die beiden quer verlaufenden Hülsen 16, die an dem T-Verbindungsstück 1 angeformt sind, dienen zur Aufnahme von Schrauben, um das T-Verbindungsstück 1 beispielsweise an einer Wand zu befestigen.

Die Figuren 3A und 3B zeigen ein weiteres Kupplungsstück 18, das demjenigen Kupplungsstück 9 entspricht, das in den Figuren 1 und 2 gezeigt, ist, das aber anstelle des Schraubgewindes 11a an dem zweiten Verbindungsende 11 einen Steckanschluss 11b mit entsprechenden Steckverbindervorsprüngen 19 aufweist.

Wie deutlich anhand der Figur 2A und insbesondere auch 3A, und zwar aufgrund der dort dargestellten Perspektive des Kupplungsstücks, zu sehen ist, weisen die Rillen 14, im Querschnitt gesehen, eine winklige Struktur bzw. parallele Seitenwände auf, so dass in diese Rillen die Verriegelungskrallen 6 mit ihren Vorsprüngen 7 (siehe Figuren 1A und 1B) eingreifen können.

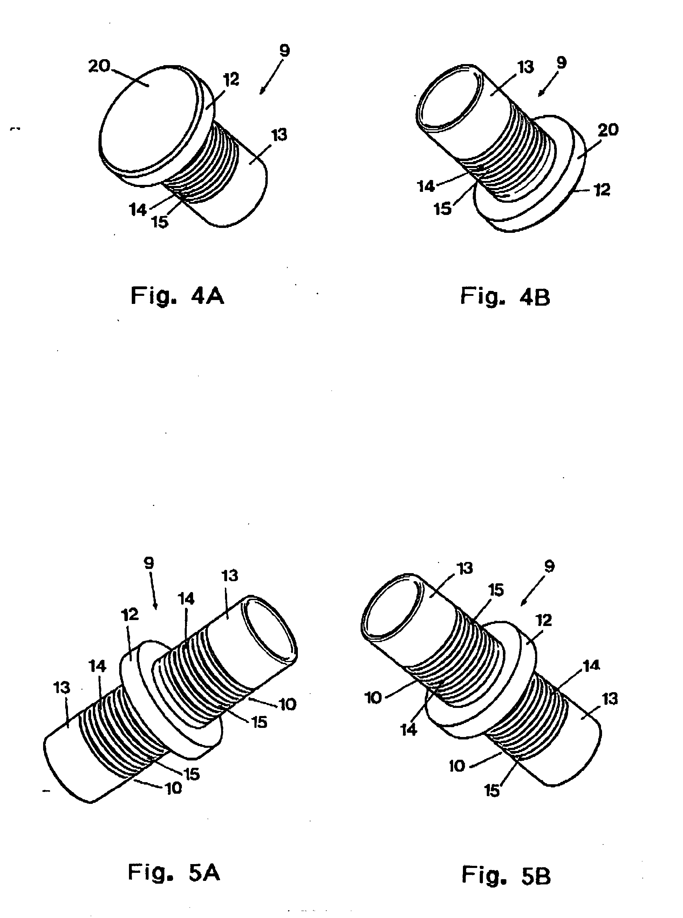

Ein weiteres Kupplungsstück ist in den Figuren 4A und 4B aus zwei unterschiedlichen Richtungen gezeigt, das wiederum das erste Verbindungsende 10, wie es auch anhand der bereits erläuterten Kupplungsstücke vorhanden ist, umfasst, bei dem allerdings das andere Ende als einfacher Flansch bzw. als Endkappe 20 ausgebildet ist. Dieses Kupplungsstück kann dazu verwendet werden, beispielsweise ein nicht benötigtes Anschlussstück 2 des T-Verbindungsstücks 1 der Figuren 1A und 1B zu verschließen.

Schließlich ist in Figuren 5A und 5B ein Kupplungsstück 9 gezeigt, das als ein Zwischenverbinder ausgelegt ist, indem auch das zweite Verbindungsende 11 als rohrförmiger Abschnitt 11 a mit Rillen 14 ausgebildet ist, so dass dieses Kupplungsstück 9 dazu verwendet werden kann, zwei Anschlussstücke 2 von verschiedenen Verbindungsstücken, wie solche, die beispielsweise in Figur 1A und 1B gezeigt sind, unmittelbar miteinander zu verbinden, um dadurch etwa mehrere Abzweige in einem Rohrschutzsystem unmittelbar hintereinander vorzusehen.

## Patentansprüche

1. Kupplungsstück (9) für Wellenschlauch-Anschlussteile mit einem ersten Verbindungsende (10), das Verbindungselemente (14) aufinreist, an denen ein Anschlussteil, mit den Verbindungselementen (14) in Eingriff gebracht, verbunden werden kann, und einem zweiten Ende (11), wobei zumindest das erste Verbindungsende (10) als rohrförmiges Teil ausgebildet ist, das als Verbindungselement mindestens eine in radialer Richtung umlaufende Rille (14) aufweist, die von dem freien Ende des rohrförmigen Teils beabstandet ist, **dadurch gekennzeichnet, dass** die mindestens eine Rille (14) in Bezug auf einen axialen Schnitt eine winklige Kontur mit annähernd parallelen Seitenwänden aufweist, und dass der freie Endabschnitt (13) des rohrförmigen Teils als Abschnitt mit einer glatten Oberfläche ausgebildet ist und der Abschnitt (13), von der Stirnseite des rohrförmigen Teils aus gemessen, eine Länge von 10 mm bis 15 mm aufweist.

2. Kupplungsstück nach Anspruch 1, **dadurch gekennzeichnet, dass** das Verbindungsende (10) mehrere in radialer Richtung umlaufende Rillen (14) aufweist, die durch ringförmige Erhebungen (15) voneinander getrennt sind, wobei die Rillen (14) und die Erhebungen (15) in ihrem Abstand zueinander und in deren Dimensionierung der Oberflächenstruktur eines Wellenschlauchs entsprechen.

3. Kupplungsstück nach Anspruch 1 oder 2, **dadurch gekennzeichnet, dass** zwischen vier und zehn Rillen (14) vorgesehen sind.

4. Kupplungsstück nach Anspruch 3, **dadurch gekennzeichnet, dass** zwischen vier und sechs Rillen (14) vorgesehen sind.

5. Kupplungsstück nach einem der Ansprüche 1 bis 4, **dadurch gekennzeichnet, dass** das zweite Ende (11) Verbindungselemente (11a, 11b, 11c) aufweist, an denen ein weiteres Ahschlussteil, mit diesen Verbindungselementen in Eingriff gebracht, verbunden werden kann.

6. Kupplungsstück nach einem der Ansprüche 1 bis 5, **dadurch gekennzeichnet, dass** beide Verbindungsenden (10; 11, 11c) die umlaufenden Rillen (14) aufweisen.

7. Kupplungsstück nach einem der Ansprüche 1 bis 4, **dadurch gekennzeichnet, dass** das zweite Ende (11) eine Endkappe (20) aufweist.

8. Kupplungsstück nach Anspruch 7, **dadurch gekennzeichnet, dass** die Endkappe (20) einteilig mit dem zweiten Ende (11) ausgebildet ist.

9. Kupplungsstück nach Anspruch 7, **dadurch gekennzeichnet, dass** das zweite Ende (11) als Anschlussteil mit Außengewinde (11a) ausgebildet ist.

10. Kupplungsstück nach Anspruch 7, **dadurch gekennzeichnet, dass** das zweite Ende (11) als Anschlussteil mit Innengewinde ausgebildet ist.

11. Kupplungsstück nach einem der Ansprüche 1 bis 10, **dadurch gekennzeichnet, dass** das Kupplungsstück (9) aus einem Kunststoff, vorzugsweise Polypropylen oder Polyamid, gebildet ist.

12. Kupplungsstück nach Anspruch 11, **dadurch gekennzeichnet, dass** der Kunststoff ein faserverstärkter Kunststoff ist.

## Claims

1. A coupling piece (9) for corrugated hose connectors with a first connecting end (10) comprising connecting elements (14), at which a connector, engaged with the connecting elements (14), can be connected, and a second end (11), at least the first connecting end (10) being formed as a tubular part that as the connecting element comprises at least one groove (14) extending in radial direction, which is spaced apart from the free end of the tubular part, **characterized in that** with respect to an axial cut the at least one groove (14) has an angular contour with approximately parallel sidewalls, and that the free end section (13) of the tubular part is shaped as a section with a smooth surface, and the section (13), measured from the front side of the tubular part, has a length of 10 mm to 15 mm.

2. The coupling piece according to claim 1, **characterized in that** the connecting end (10) comprises a plurality of grooves (14) extending in radial direction, which are separated from one another by annular elevations (15), wherein the grooves (14) and the elevations (15) correspond in their distance from one another and in their dimensions to the surface structure of a corrugated hose.

3. The coupling piece according to claim 1 or 2, **characterized in that** between four and ten grooves (14) are provided.

4. The coupling piece according to claim 3, **characterized in that** between four and six grooves (14) are provided.

5. The coupling piece according to any one of claims 1 to 4, **characterized in that** the second end (11) comprises connecting elements (11 a, 11 b, 11c) at which a further connector, engaged with said connecting elements, can be connected.

6. The coupling piece according to any one of claims 1 to 5, **characterized in that** both connecting ends (10; 11, 11c) comprise the surrounding grooves (14).

7. The coupling piece according to any one of claims 1 to 4, **characterized in that** the second end (11) comprises an end cap (20).

8. The coupling piece according to claim 7, **characterized in that** the end cap (20) is made integral with the second end (11).

9. The coupling piece according to claim 7, **characterized in that** the second end (11) is configured as a connector with external thread (11a).

10. The coupling piece according to claim 7, **characterized in that** the second end (11) is configured as a connector with internal thread.

11. The coupling piece according to any one of claims 1 to 10, **characterized in that** the coupling piece (9) is made of plastic, preferably polypropylene or polyamide.

12. The coupling piece according to claim 11, **characterized in that** the plastic is a fiber-reinforced plastic.

## Revendications

1. Pièce d'accouplement (9) pour des pièces de raccordement de gaine annelée, présentant une première extrémité de liaison (10), qui comporte des éléments de liaison (14) auxquels peut être reliée une pièce de raccordement en venant en prise avec les éléments de liaison (14), et une deuxième extrémité (11), au moins la première extrémité de liaison (10) étant réalisée en tant que partie de forme tubulaire, qui présente, en tant qu'élément de liaison, au moins une gorge (14) périphérique en direction radiale, qui est située à distance de l'extrémité libre de la partie de forme tubulaire, **caractérisée en ce que** ladite au moins une gorge (14) présente, en se référant à une coupe axiale, un contour anguleux avec des parois latérales approximativement parallèles, et **en ce que** le tronçon d'extrémité libre (13) de la partie de forme tubulaire est réalisé en tant que tronçon à surface lisse, et le tronçon (13) présente une longueur de 10 mm à 15 mm mesurée à partir de la face frontale de la partie de forme tubulaire.

2. Pièce d'accouplement selon la revendication 1, **caractérisée en ce que** l'extrémité de liaison (10) présente plusieurs gorges (14) périphériques en direction radiale, qui sont séparées les unes des autres par des proéminences annulaires (15), les gorges (14) et les proéminences (15) correspondant, quant à leur espacement réciproque et à leur dimensionnement, à la structure de surface d'une gaine annelée.

3. Pièce d'accouplement selon la revendication 1 ou la revendication 2, **caractérisée en ce que** sont prévues entre quatre et dix gorges (14).

4. Pièce d'accouplement selon la revendication 3, **caractérisée en ce que** sont prévues entre quatre et six gorges (14).

5. Pièce d'accouplement selon l'une des revendications 1 à 4, **caractérisée en ce que** la deuxième extrémité (11) présente des éléments de liaison (11 a, 11 b, 11 c) auxquels peut être reliée une autre pièce de raccordement en venant en prise avec ces éléments de liaison.

6. Pièce d'accouplement selon l'une des revendications 1 à 5, **caractérisée en ce que** les deux extrémités de liaison (10; 11, 11c) présentent les gorges (14) périphériques.

7. Pièce d'accouplement selon l'une des revendications 1 à 4, **caractérisée en ce que** la deuxième extrémité (11) présente un cabochon d'extrémité (20).

8. Pièce d'accouplement selon la revendication 7, **caractérisée en ce que** le cabochon d'extrémité (20) est réalisé d'un seul tenant avec la deuxième extrémité (11).

9. Pièce d'accouplement selon la revendication 7, **caractérisée en ce que** la deuxième extrémité (11) est réalisée en tant que pièce de raccordement comportant un filetage extérieur (11a).

10. Pièce d'accouplement selon la revendication 7, **caractérisée en ce que** la deuxième extrémité (11) est réalisée en tant que pièce de raccordement comportant un filetage intérieur.

11. Pièce d'accouplement selon l'une des revendications 1 à 10, **caractérisée en ce que** la pièce d'accouplement (9) est réalisée en une matière plastique, de préférence du polypropylène ou du polyamide.

12. Pièce d'accouplement selon la revendication 11, **caractérisée en ce que** la matière plastique est une matière plastique renforcée de fibres.
